# EUROPÄISCHE PATENTSCHRIFT

(11) **EP 4 003 798 B1**
(45) Veröffentlichungstag und Bekanntmachung des Hinweises auf die Patenterteilung: **15.01.2025**
(21) Anmeldenummer: 20750191.7
(22) Anmeldetag: 23.07.2020
(51) Int. Cl.: B60T 13/04, B60T 13/74, F16D 65/18, F16D 65/46

(54) **STELLVORRICHTUNG FÜR EIN MECHANISCHES BREMSSYSTEM**
ACTUATOR FOR A MECHANICAL BRAKE SYSTEM
ACTIONNEUR POUR UN SYSTÈME DE FREINAGE MÉCANIQUE

(30) Priorität: 26.07.2019 DE 102019120341
(43) Veröffentlichungstag der Anmeldung: 01.06.2022
(73) Patentinhaber: thyssenkrupp AG, 45143 Essen (DE); thyssenkrupp Presta Aktiengesellschaft, 9492 Eschen (LI)
(72) Erfinder: SZIMANDL, Barna, 9473 Gams (CH)
(74) Vertreter: thyssenkrupp Intellectual Property GmbH
(86) Internationale Anmeldenummer: PCT/EP2020/070737
(87) Internationale Veröffentlichungsnummer: WO 2021/018705

(56) Entgegenhaltungen:
- DE-A1- 102007 055 637
- DE-A1- 102009 055 265

## Beschreibung

Die Erfindung betrifft eine Stellvorrichtung für ein mechanisches Bremssystem, insbesondere eine Stellvorrichtung zum Zustellen eines Bremsbelags an eine Bremsscheibe.

Insbesondere Kraftfahrzeuge oder Aufzüge verwenden elektromechanische Bremse bzw. eine Stellvorrichtung für eine mechanische Bremse, die mit der Zeit kleiner bauend entwickelt werden. Dabei soll unter anderem der Leistungsbedarf für elektrische Antriebs- bzw. Stellmotoren der mechanischen Bremsen durch Nutzung einer Energieschaukel reduziert werden.

Aus dem Stand der Technik sind Energieschaukeln beispielsweise aus EP2005022 (Knorr 2006) oder EP1244879B1 (Wabco 1999) bekannt. Das Prinzip beruht auf dem Austausch von Energie zwischen dem Bremssystem, insbesondere dem beim Bremsen verspannten Bremssattel, und einem zusätzlichen Energiespeicher. Beim Bremsen wird der Bremssattel durch die Bremskräfte elastisch verformt. Beim Lösen der Bremse wird diese im Bremssattel gespeicherte Energie auf einen Energiespeicher übertragen bzw. zwischengespeichert und für einen kommenden Bremsvorgang für die Zustellung genutzt. Die Energiespeicher sind auch unter dem Namen Kraftspeicher oder Kraftpatrone bekannt. Sie sind z.B. als in den Stelltrieb der elektromechanischen Bremse integrierte Federelemente ausgeführt. Der Stelltrieb befindet sich dabei näherungsweise in einem bistabilen Zustand, welcher durch kleine Kräfte in die eine (Zustellung) oder andere Seite (Lösen der Bremse) ausgelenkt werden kann.

EP2005022 (Knorr 2006) zeigt ein solche Energieschaukel mit einem Energiespeicher, welcher mit einer Hebelanordnung verbunden ist. Der Energiespeicher wird über eine exzentrisch gelagerte Kurvenscheibe gesteuert, wobei Hebelstellung und Kurvenscheibenkontur so aufeinander eingestellt sind, dass stets ein bistabiler Zustand erreicht wird. Nachteilig an dieser Lösung ist der hohe Bauraum. Auch muss die Massenträgheit der Hebelanordnung bei jeder Verstellung mitbewegt werden. Dies ist nachteilig für schnelle Ansprechzeiten.

EP1244879B1 (Wabco 1999) zeigt eine Energieschaukel mit feststehendem Energiespeicher 128 und zwei hebelartige Konturen 101, 102, die über eine Doppelrolle (Rolle 126 - Kontur 108, Rolle 127 - Kontur 109) betätigt wird.

Nachteilig ist der zusätzliche Bauraum, der für den Energiespeicher vorgehalten werden muss. Nachteilig ist insbesondere, dass keine Verschleißnachstellung möglich ist.

DE10140076A1 (WABCO 2006) zeigt eine Energieschaukel mit verdrehbaren Nocken 4, 5. Die Nocken sind ineinander liegend und weisen unterschiedliche Außendurchmessern auf. Die Nocken sind radial und axial fest verbunden, d.h. beide Nocken weisen stets denselben Verdrehwinkel und dieselbe Verstellhöhe auf. Der Bremsvorgang wird über die Verdrehung um Achse 17, 19 des Rollenhalters mit Rollen 15, 15a eingeleitet. Die Bremszustellung erfolgt über einen Hebel 18". Nachteilig ist der zusätzliche Bauraum, der für den Energiespeicher vorgehalten werden muss. Nachteilig ist insbesondere der Angriffspunkt 17 eines Antriebs (nicht dargestellt) in unmittelbarer Nähe zur Bremsscheibe 21.

Aus der DE 10 2007 055637 A1 ist ferner eine elektromechanische Reibungsbremse, mit einer elektromechanischen Betätigungseinrichtung und mit einem Reibbremsbelag bekannt geworden, der zur Betätigung der Reibungsbremse mit der Betätigungseinrichtung gegen einen zu bremsenden Bremskörper druckbar ist, und mit einem Federelement, das eine fallende Federkennlinie aufweist und das parallel zur Betätigungseinrichtung wirkt und den Reibbremsbelag im Sinne einer Bremsbetätigung beaufschlagt, wobei die Betätigungseinrichtung einen Elektromotor und einen Rampenmechanismus aufweist, der eine rotatorische Antriebsbewegung des Elektromotors in eine translatorische Bewegung zum Drücken des Reibbremsbelags gegen den Bremskörper aufweist.

Auch aus der DE 10 2009 055265 A1 ist Radbremse für ein Landfahrzeug, mit einem Reibbremsbelag und mit zwei redundanten Betätigungseinrichtungen bekannt geworden, mit denen der Reibbremsbelag zum Bremsen eines drehbaren Bremskörpers gegen den Bremskörper drückbar ist, wobei die eine Betätigungseinrichtung elektromechanisch und die andere Betätigungseinrichtung druckbetätigbar ist, wobei die Radbremse einen Energiespeicher aufweist, der bei einem Lösen der Radbremse Energie speichert und bei einer Betätigung der Radbremse Energie abgibt und die Betätigung der Radbremse unterstützt.

Es ist Aufgabe der vorliegenden Erfindung, die zuvor genannten Nachteile zu überwinden, zumindest zu reduzieren, und insbesondere eine Stellvorrichtung mit Energieschaukel in kompakter Bauform anzugeben.

Die Erfindung stellt somit eine Stellvorrichtung für ein mechanisches Bremssystem gemäß Anspruch 1 bereit. Hierbei handelt es sich im Detail um eine Stellvorrichtung mit einer Energieschaukel für ein mechanisches Bremssystem, wobei die Stellvorrichtung einen Stelltrieb zur Zustellung eines Bremsteils für eine Betriebsbremsfunktion aufweist. Die Stellvorrichtung weist eine Kraftpatrone mit einer vorgespannten Feder und einem Rampenlager als Energieschaukel auf, wobei das Rampenlager mit dem Stelltrieb auf einer Seite und mit der Feder auf der anderen Seite befestigt ist. Die Kraftpatrone wechselwirkt derart mit dem Stelltrieb, dass in Abhängigkeit der Verstellposition des Stelltriebs eine Kraftkomponente zur Unterstützung des Stelltriebs zur Verfügung gestellt wird. Außerdem ist die Kraftpatrone insbesondere auf einer Kraft-Wirkungslinie des Stelltriebs angebracht.

Durch diese Unterstützung ist es möglich, dass die Stellmotoren kleiner dimensioniert werden und eine niedrigere Drehzahl bzw. ein daraus resultierendes niedrigeres Drehmoment (mit Getriebe) zur Verfügung stellen können. Dadurch können kostengünstigere Stellmotoren verwendet werden. Außerdem wird der notwendige Energieverbrauch der Stellmotoren reduziert.

Vorzugsweise weist das Rampenlager eine Kurvenbahn mit einem oder mehreren linearen und/oder nichtlinearen Bereich/en auf. Je nach gewünschtem Bremsverhalten und/oder Kraftunterstützung kann die Kurvenbahn angepasst werden. Ebenso kann die Kurvenbahn abhängig von der Drehmomentkurve des Stellmotors angepasst sein, da die Drehmomentkurve nicht linear verläuft.

Die Kurvenbahn/en ist/sind bevorzugt stetig differenzierbar in ihren Steigungen ausgebildet.

Erfindungsgemäß weist der Stelltrieb ein zweites Rampenlager für die Bremszustellung auf, wobei das zweite Rampenlager eine Kurvenbahn mit einem oder mehreren linearen und/oder nichtlinearen Bereich/en aufweist.

Die verschiedenen Bereiche können für unterschiedliche Aufgabe entsprechend ausgestalten sein, wie die folgende vorteilhafte Ausführungsform zeigt: das zweite Rampenlager weist einen ersten Bereich mit hoher Steigung zur schnellen Überwindung eines Luftspalts und einen zweiten Bereich mit niedriger Steigung zur Erzeugung hoher Zustellkräfte auf.

Vorzugsweise sind die Kurvenbahn/en vom ersten und zweiten Rampenlager derart aufeinander abgestimmt, dass über bestimmte Verdrehwinkel der Stellvorrichtung eine bistabile oder instabile Lage für die (Zu)stelleinrichtung erreicht werden kann. Dadurch können je nach Bedarf selbstlösende oder auch selbstspannende/selbstverstärkende Bremsfunktionen realisiert werden.

Um die Effekte der entsprechend ausgestalteten Bereiche zu kombinieren und somit zu verstärken, kann das erste Rampenlager zwei über den Verdrehwinkel mit dem zweiten Rampenlager korrespondierende Bereiche, einen ersten und einen zweiten Bereich A und B, aufweisen, wobei
der erste Bereich A eine Nullsteigung für ein neutrales Verhalten während der Überwindung eines Luftspalts aufweist und der zweite Bereich B eine derart abgestimmte nichtlineare Charakteristik aufweist, dass über den gesamten Bereich des Bremseingriffs eine bistabile Lage erzeugt werden kann. Dadurch ist die vom Antrieb aufzubringende Zustellkraft im Wesentlichen auf die Überwindung von Systemverlusten (Reibungsverlusten) und Trägheitsmomenten beschränkt.

Vorteilhafterweise ist die Stellvorrichtung mit zwei Stellantrieben ausgebildet, die gemeinsam oder unabhängig voneinander eine Bremszustellung durchführen können. Dadurch steht eine redundante Lösung parat, die weiterhin ein Bremsen bzw. Zustellen des Bremsbelags ermöglicht, falls eine der beiden Stellantriebe bzw. Stellmotoren ausfallen sollte.

Vorzugsweise weist das erste oder zweite Rampenlager eine Rastposition, insbesondere in Form einer Delle oder Mulde, auf, die eine Rastposition für eine Parkbremsfunktion bildet. Dies kann als eine Parkbremsfunktion dienen, insbesondere, wenn durch gegensinniger Drehrichtung der Stellantriebe eine Verschließnachstellfunktion realisiert wird.

Des Weiteren hat es sich als vorteilhaft herausgestellt, wenn die vorgespannte Feder mit einem Ende an dem ersten Rampenlager und mit einem gegenüberliegenden Ende an einem Bremssattel befestigt ist.

In den Ansprüchen wurden die folgenden Merkmale von weiteren vorteilhaften Ausführungsformen nicht erwähnt:
Teile des Stelltriebs sind vorzugsweise von der Feder, insbesondere in Form einer Spiralfeder, umfasst bzw. sind innerhalb des Innenumfangs der Spiralfeder angeordnet. Dadurch ist eine kompaktere Anordnung möglich.

Das Rampenlager der Energieschaukel weist axial übereinander angeordnete Ringe auf, zwischen denen drei oder mehrere Walzkörper, insbesondere in Form von Kugeln, bewegbar gelagert sind. Hierzu weist der untere Ring eine durchgehend ringförmige Mulde und der obere Ring eine ringförmige oder mehrere bogenförmige Mulden auf. Dies kann auch umgekehrt bzw. gespiegelt ausgebildet sein. Die beiden Ringe weisen eine gemeinsame Drehachse in ihrem Mittelpunkt auf und sind um diese rotier- bzw. schwenkbar.

Das Rampenlager der Bremszustellung weist ebenfalls drei oder mehrere Walzkörper, insbesondere in Form von Kugeln, auf, die zwischen zwei ringförmigen Bauteilen bewegbar gelagert sind. Die Mulden in den beiden Bauteilen können wie die des Rampenlagers der Energieschaukel geformt sein.

Die nachfolgend beschriebenen Figuren beziehen sich auf bevorzugte Ausführungsbeispiele des erfindungsgemäßen Kombikabels als auch der erfindungsgemäßen Achsantriebseinheit, wobei diese Figuren nicht als Einschränkung, sondern im Wesentlichen der Veranschaulichung der Erfindung dienen. Elemente aus unterschiedlichen Figuren, aber mit denselben Bezugszeichen sind identisch; daher ist die Beschreibung eines Elements aus einer Figur für gleichbezeichnete bzw. gleichnummerierte Elemente aus anderen Figuren auch gültig.

Es zeigen
- Figur 1: eine perspektivische Ansicht auf ein mechanisches Bremssystem mit einer Stellvorrichtung gemäß einem erfindungsgemäßen Ausführungsbeispiel;
- Figur 2: eine Querschnittsansicht auf das mechanische Bremssystem aus Figur 1;
- Figur 3: eine Explosionsdarstellung auf das mechanische Bremssystem aus Figur 1;
- Figur 4: eine schematische Querschnittsansicht auf eine erfindungsgemäße Stellvorrichtung in einer Ausgangslage;
- Figur 5: eine schematische Querschnittsansicht auf die erfindungsgemäße Stellvorrichtung gemäß Figur 4 bei einem Betriebsbremsen;
- Figur 6: eine schematische Querschnittsansicht auf eine erfindungsgemäße Stellvorrichtung gemäß Figur 5 bei einer Verschleißnachstellung.

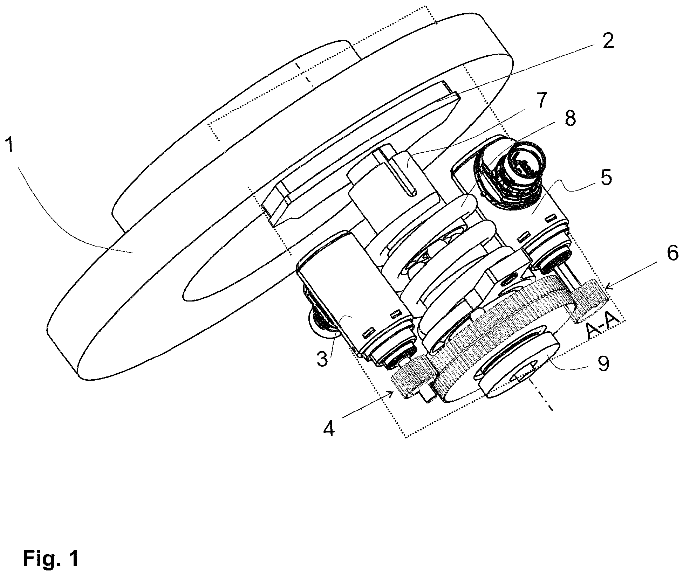

Figur 1 zeigt eine perspektivische Ansicht auf ein mechanisches Bremssystem mit einer Stellvorrichtung gemäß einem erfindungsgemäßen Ausführungsbeispiel. Das Bremsen erfolgt durch das Zustellen und Andrücken eines Bremsbelags 2 gegen eine Bremsscheibe 1. Der Bremsbelag 2 ist hierbei Teil eines Bremsschuhs. Zum Zustellen des Bremsbelags 2 wird eine Stellvorrichtung verwendet. Die Stellvorrichtung weist einen axialverschiebbaren Stellbolzen 7, eine Spiralfeder 8 als Energiespeicher, ein erstes Getriebe 4 für einen ersten Stellmotor 3, ein zweites Getriebe 6 für einen zweiten Stellmotor 5 sowie einen Aufnahmeteller 9 als Axiallager und Verbindung zu einem Bremssattel (nicht vollständig gezeigt). Der Bremssattel weist den Bremsbelag 2 als ein Bremsteil und die Stellvorrichtung auf, wobei insbesondere die Stellvorrichtung in einem Gehäuse angeordnet ist. Der Bremssattel wird auf bzw. um die Bremsscheibe 1 angeordnet.

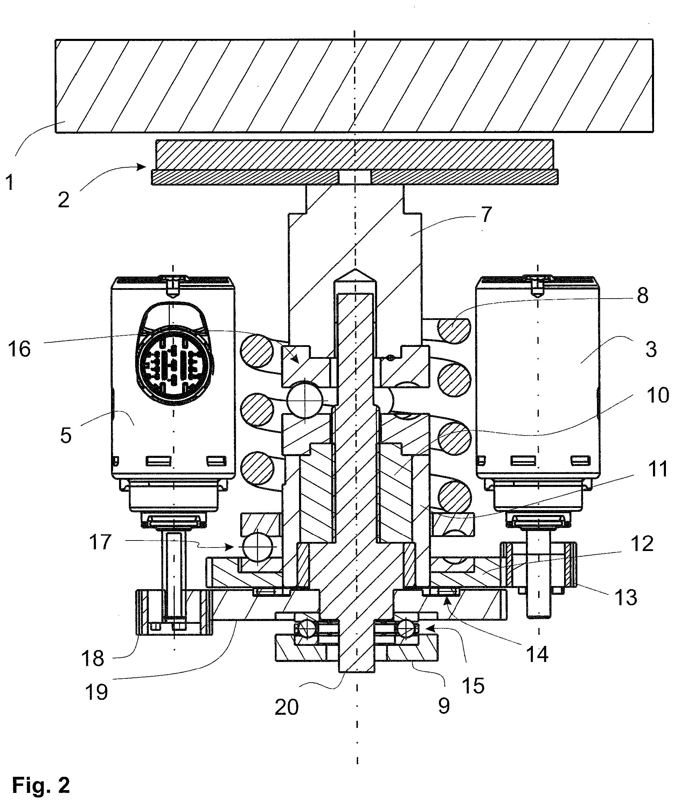

Figur 2 zeigt eine Querschnittsansicht auf das mechanische Bremssystem aus Figur 1, wobei die Querschnittsebene A-A in Figur 1 eingezeichnet ist. Hierbei sind zusätzliche Details dargestellt. Der Bremsbelag 2 ist planparallel an die Bremsscheibe 1 zustellbar. Die Zustellung erfolgt insbesondere durch die axiale Verschiebung einer Stellmutter 10, auf der ein ringförmiges Teil des Rampenlagers 16 als Bremszustellung verdrehsicher angeordnet ist. Das Rampenlager 16 weist kugelförmige Wälzkörper auf und ist auf seiner anderen bzw. gegenüberliegenden Seite mit dem Stellbolzen 7 verdrehsicher befestigt. Das bedeutet, dass eine Rotation der Stellmutter 10 bei dessen axiale Verschiebung nicht auf den Stellbolzen 7 übertragen wird. Die Stellmutter 10 steht sowohl mit einer Stell-Spindel 20 sowie mit einer Stellhülse 11 in Wirkeingriff und kann über eine oder beide dieser Komponenten 20, 11 bewegt (oder auch gesperrt - Parkfunktion) werden. Die Stell-Spindel 20 weist ein spindelförmiges Außengewinde auf, das mit einem Innengewinde der Stellmutter 10 in Wirkeingriff steht. Dadurch kann eine Rotation der Stell-Spindel 20 in eine Axialbewegung der Stellmutter 10 transformiert werden. Die Stellhülse 11 weist mehrere geradlinige und parallel zur Achse angeordnete Nuten an seinem Innenumfang auf, die mit den gegengleich ausgeformten Außennuten der Stellmutter 10 in Wirkeingriff stehen. Hierbei kann eine Rotation der Stellhülse 11 zu einer Axialbewegung der Stellmutter 10 führen. Die Stellhülse 11 ist mit einem Zahnrad 12 befestigt, das über ein Antriebsritzel 13 des Stellmotors 3 angetrieben und in Rotation versetzt werden kann. Das in Figur 1 beschriebene Getriebe 4 (auch als Getriebe A bezeichnet) wird durch das Zahnrad 12 und das Antriebsritzel 13 gebildet. Auf der Oberseite des Zahnrads 12 ist ein erstes unteres ringförmiges Bauteil des Rampenlagers 17 der Energieschaukel befestigt. Das zweite obere ringförmige Bauteil des Rampenlagers 17 ist mittels kugelförmiger Wälzkörper auf dem ersten Bauteil gelagert. Dabei wird das zweite ringförmige Bauteil mittels einer vorgespannten Spiralfeder 8 als Energiespeicher auf die Wälzkörper und somit auf das erste Bauteil gedrückt. Das zweite Bauteil des Rampenlagers 17 ist lediglich mit der Spiralfeder 8 festverbunden bzw. mit der Spiralfeder 8 und den Wälzkörpern in Wirkeingriff, damit unter anderem die Stellhülse 11 unabhängig von diesem Bauteil rotieren kann. Das Zahnrad A 12 ist auf einem Zahnrad B 19 mittels eines Axiallagers bzw. Nadellagers 14 rotierbar gelagert, wobei das Nadellager 14 auf der Oberseite des Zahnrads B 19 angeordnet und mit diesem befestigt ist. Das in Figur 1 beschriebene Getriebe 6 (auch als Getriebe B bezeichnet) wird durch das Zahnrad 19 und das Antriebsritzel 18 gebildet. Das Zahnrad 19 ist mit der Stell-Spindel 20 festverbunden und bringt dieses mittels des Stellmotors 5 in Rotation. Das Zahnrad B 19 ist mittels eines Axiallagers bzw. Kugellagers 15 drehbar mit dem Aufnahmeteller 9 verbunden. Der Aufnahmeteller 9 dient als Aufnahme für das Kugellager 15 und ist mit dem Bremssattel (nicht dargestellt) festverbunden. Alle Bauteile der Stellvorrichtung sind koaxial um die Drehachse der Spindel 20 angeordnet.

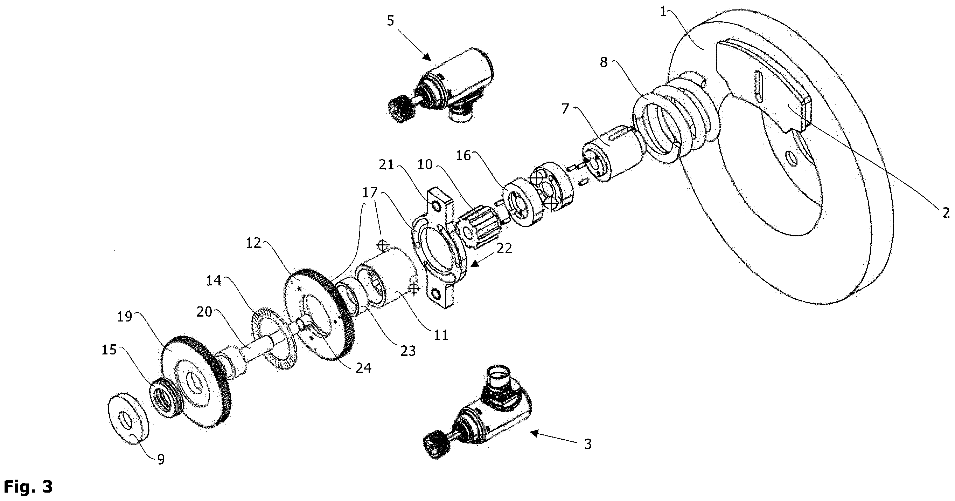

Figur 3 zeigt eine Explosionsdarstellung auf das mechanische Bremssystem aus Figur 1 bzw. Figur 2. Neben den zuvor beschriebenen Elementen bzw. Bauteilen werden eine erste Gleithülse 23 und eine zweite Gleithülse 24 im Detail dargestellt. Die erste Gleithülse 23 ist zwischen der Stell-Spindel 20 und der Stellhülse 11 angeordnet und ermöglicht als Gleitkontakt/-fläche eine drehbare Lagerung von Spindel 20 und Stellhülse 11. Die zweite Gleithülse 24 ist zwischen der Stell-Spindel 20 und dem Stellbolzen 7 angeordnet und ermöglicht als Gleitkontakt/-fläche eine drehbare Lagerung der Spindel 20 gegenüber dem Stellbolzen 7. Die Gleithülsen 23, 24 dienen insbesondere der Lage- und Kippstabilisierung der mit den Gleithülsen in Kontakt stehenden Bauteilen. Das Rampenlager 17 wird durch ein oberes ringförmiges Bauteil mit drei bogenförmigen Mulden, drei in den Mulden angeordnete kugelförmige Wälzkörper und durch ein unteres ringförmiges Bauteil (insbesondere als Einsatz im Zahnrad 12) mit einer ringförmigen Mulde (nicht sichtbar) gebildet. Das obere Bauteil des Rampenlagers 17 weist zusätzlich eine Verdrehsicherung 21 sowie eine oberseitige Auflagefläche 22 für die Feder 8 auf. Die Verdrehsicherung 21 wird z.B. an einem axial verlaufenden Stab oder Schiene (nicht dargestellt) befestigt, damit der obere Teil des Rampenlagers 17 axial verschiebbar ist und die Kraft der Feder 8 auf die Wälzkörper, über das Zahnrad 12 und schließlich an die Stellhülse 11 übertragen werden kann. Ähnlich wie das Rampenlager 17 der Energieschaukel weist das Rampenlager 16 der Bremszustellung ein oberes ringförmiges Bauteil mit drei bogenförmigen Mulden, drei in den Mulden angeordnete kugelförmigen Wälzkörper und ein unteres ringförmiges Bauteil mit einer ringförmigen Mulde (nicht sichtbar) gebildet. Das obere Bauteil und das untere Bauteil des Rampenlagers 16 sind jeweils mit drei Stiften mit dem Stellbolzen 7 und der Stellmutter 10 verdrehsicher verbunden.

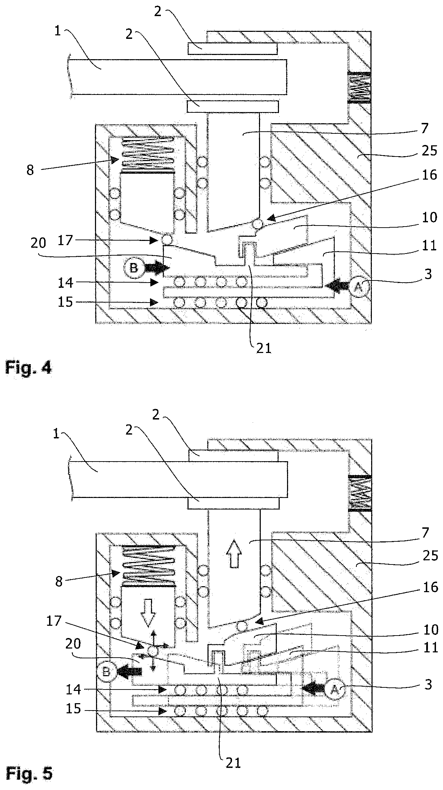

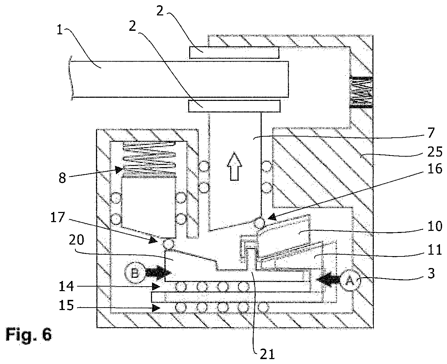

Die Figuren 4, 5 und 6 zeigen jeweils eine schematische Querschnittsansicht auf eine erfindungsgemäße Stellvorrichtung; zuerst in einer Ausgangslage, dann bei einem Betriebsbremsen und zuletzt bei einer Verschleißnachstellung. Die Querschnittsansicht veranschaulicht insbesondere die auf die Bauteile der Stellvorrichtung wirkenden Kräfte und deren Kraftrichtungen untereinander dar. Die Bauteile wurden bereits in den Figuren 1 bis 3 beschrieben. Gut erkennbar ist die Funktion der Stellmutter 10, die sowohl durch die Betätigung des Stelltriebs A mit der Stellhülse 11 (ausgehend durch den Stellmotor A 3) als auch durch die Betätigung des Stelltriebs B mit der Stell-Spindel 20 (ausgehend durch den Stellmotor B 4) bewegt werden kann. Durch die Bewegung der Stellmutter 10 z.B. durch horizontales Verschieben mittels des Stelltriebs B (siehe Fig. 5) oder durch vertikales Verschieben mittels des Stelltriebs A (siehe Fig. 6) wird der Stellbolzen 7 verschoben und der Bremsbelag 2 zugestellt. Beim Betriebsbremsen in Fig. 5 unterstützt die Kraft der Kraftpatrone mit der vorgespannten Feder 8 und dem Rampenlager 17 den Stelltrieb B. Die Querschnittsansichten veranschaulichen die beiden Bremsbelege 2, die in dem Bremssattel 25 angeordnet sind und mittels der Stellvorrichtung verschoben bzw. zugestellt werden.

### Bezugszeichenliste

- 1: Bremsscheibe
- 2: Bremsschuh mit Bremsbelag
- 3: Stellmotor A
- 4: Getriebe A
- 5: Stellmotor B
- 6: Getriebe B
- 7: Stellbolzen
- 8: Feder als Energiespeicher
- 9: Aufnahmeteller Axiallager/Verbindung zum Bremssattel
- 10: Stellmutter
- 11: Stellhülse
- 12: Zahnrad A
- 13: Antriebsritzel A
- 14: Axiallager/Nadellager
- 15: Axiallager/Kugellager
- 16: Rampenlager (Bremszustellung)
- 17: Rampenlager (Energieschaukel)
- 18: Zahnrad B
- 19: Antriebsritzel B
- 20: Stell-Spindel
- 21: Verdrehsicherung für Nocke Rampenlager
- 22: Auflagefläche Feder/Energiespeicher
- 23: Gleithülse für Gleitkontakt Stellspindel-Stellbolzen
- 24: Gleithülse für Gleitkontakt Stellspindel-Stellhülse
- 25: Bremssattel

## Patentansprüche

1. Stellvorrichtung mit einer Energieschaukel für ein mechanisches Bremssystem, wobei die Stellvorrichtung einen Stelltrieb zur Zustellung eines Bremsteils für eine Betriebsbremsfunktion aufweist,
wobei
die Stellvorrichtung eine Kraftpatrone mit einer vorgespannten Feder (8) und einem ersten Rampenlager (17) als Energieschaukel aufweist, wobei das erste Rampenlager (17) mit dem Stelltrieb auf einer Seite und mit der Feder (8) auf der anderen Seite befestigt ist, wobei die Kraftpatrone auf einer Kraft-Wirkungslinie des Stelltriebs angebracht ist und derart mit dem Stelltrieb wechselwirkt, dass in Abhängigkeit der Verstellposition des Stelltriebs eine Kraftkomponente zur Unterstützung des Stelltriebs zur Verfügung gestellt wird, **dadurch gekennzeichnet, dass** der Stelltrieb ein zweites Rampenlager (16) für die Bremszustellung aufweist, wobei das zweite Rampenlager (16) eine Kurvenbahn mit einem oder mehreren linearen und/oder nicht-linearen Bereich/en aufweist.

2. Stellvorrichtung nach Anspruch 1,
**dadurch gekennzeichnet, dass**
das erste Rampenlager (17) eine Kurvenbahn mit einem oder mehreren linearen und/oder nicht-linearen Bereich/en aufweist.

3. Stellvorrichtung nach Anspruch 1,
**dadurch gekennzeichnet, dass**
das zweite Rampenlager (16) einen ersten Bereich mit hoher Steigung zur schnellen Überwindung eines Luftspalts und einen zweiten Bereich mit niedriger Steigung zur Erzeugung hoher Zustellkräfte aufweist.

4. Stellvorrichtung nach Anspruch 1 oder 3,
**dadurch gekennzeichnet, dass**
die Kurvenbahn/en vom ersten und zweiten Rampenlager (17; 16) derart aufeinander abgestimmt sind, dass über bestimmte Verdrehwinkel der Stellvorrichtung eine bistabile oder instabile Lage für den Stelltrieb zur Zustellung erreicht werden kann.

5. Stellvorrichtung nach Anspruch 4,
**dadurch gekennzeichnet, dass**
das erste Rampenlager (17) zwei über den Verdrehwinkel mit dem zweiten Rampenlager (16) korrespondierende Bereiche, einen ersten und einen zweiten Bereich A und B, aufweist, wobei
der erste Bereich A eine Nullsteigung für ein neutrales Verhalten während der Überwindung eines Luftspalts aufweist und der zweite Bereich B eine derart abgestimmte nicht-lineare Charakteristik aufweist, dass über den gesamten Bereich des Bremseingriffs eine bistabile Lage erzeugt werden kann.

6. Stellvorrichtung nach einem der Ansprüche 1 bis 5,
**dadurch gekennzeichnet, dass**
die Stellvorrichtung mit zwei Stellantrieben ausgebildet ist, die gemeinsam oder unabhängig voneinander eine Bremszustellung durchführen können.

7. Stellvorrichtung nach einem der Ansprüche 1 bis 6,
**dadurch gekennzeichnet, dass**
das erste oder zweite Rampenlager (17; 16) eine Rastposition, insbesondere in Form einer Delle oder Mulde, aufweist, die eine Rastposition für eine Parkbremsfunktion bildet.

8. Stellvorrichtung nach einem der Ansprüche 1 bis 7,
**dadurch gekennzeichnet, dass**
die vorgespannten Feder (8) mit einem Ende an dem ersten Rampenlager (17) und mit einem gegenüberliegenden Ende an einem Bremssattel (25) befestigt ist.

## Claims

1. Actuating device with an energy swing for a mechanical brake system, wherein the actuating device has an actuating drive for adjusting a brake part for a service brake function,
wherein
the actuating device has a force cartridge with a pretensioned spring (8) and a first ramp bearing (17) as an energy swing, the first ramp bearing (17) being fastened to the actuating drive on one side and to the spring (8) on the other side, the force cartridge being mounted on a force-action line of the actuating drive and interacting with the actuating drive in such a way that a force component is made available to support the actuator drive as a function of the adjustment position of the actuator drive, **characterised in that** the actuator drive has a second ramp bearing (16) for the brake feed, the second ramp bearing (16) having a cam track with one or more linear and/or non-linear region(s).

2. Actuating device according to claim 1,
**characterised in that**
the first ramp bearing (17) has a curved path with one or more linear and/or non-linear region(s).

3. Actuating device according to claim 1,
**characterised in that**
the second ramp bearing (16) has a first region with a high pitch for quickly overcoming an air gap and a second region with a low pitch for generating high feed forces.

4. Actuating device according to claim 1 or 3,
**characterised in that**
the cam track(s) of the first and second ramp bearing (17; 16) are matched to one another in such a way that a bistable or unstable position can be achieved for the actuating drive for infeed via certain angles of rotation of the actuating device.

5. Actuating device according to claim 4,
**characterised in that**
the first ramp bearing (17) has two regions corresponding to the second ramp bearing (16) via the angle of rotation, a first and a second region A and B, wherein
the first range A has a zero gradient for neutral behaviour during the overcoming of an air gap and the second range B has a non-linear characteristic tuned in such a way that a bistable position can be generated over the entire range of the brake application.

6. Actuating device according to one of claims 1 to 5,
**characterised in that**
the actuating device is designed with two actuators which can perform a brake application jointly or independently of one another.

7. Actuating device according to one of claims 1 to 6,
**characterised in that**
the first or second ramp bearing (17; 16) has a detent position, in particular in the form of a dent or trough, which forms a detent position for a parking brake function.

8. Actuating device according to one of claims 1 to 7,
**characterised in that**
the pretensioned spring (8) is fastened with one end to the first ramp bearing (17) and with an opposite end to a brake caliper (25).

## Revendications

1. Dispositif de réglage avec une balancelle d'énergie pour un système de freinage mécanique, le dispositif de réglage présentant un entraînement de réglage pour l'avance d'un élément de freinage pour une fonction de freinage de service,
où
le dispositif de réglage présente une cartouche de force avec un ressort précontraint (8) et un premier palier à rampe (17) comme balancier d'énergie, le premier palier à rampe (17) étant fixé avec l'actionneur d'un côté et avec le ressort (8) de l'autre côté, la cartouche de force étant montée sur une ligne d'action de force de l'actionneur et interagissant avec l'actionneur de telle sorte, qu'en fonction de la position de réglage de l'actionneur, une composante de force est mise à disposition pour assister l'actionneur, **caractérisé en ce que** l'actionneur présente un deuxième palier à rampe (16) pour la position de freinage, le deuxième palier à rampe (16) présentant une trajectoire courbe avec une ou plusieurs zones linéaires et/ou non linéaires.

2. Dispositif de réglage selon la revendication 1,
**caractérisé en ce que**
le premier palier de rampe (17) présente une trajectoire courbe avec une ou plusieurs zones linéaires et/ou non linéaires.

3. Dispositif de réglage selon la revendication 1,
**caractérisé en ce que**
le deuxième palier de rampe (16) présente une première zone à forte pente pour franchir rapidement un entrefer et une deuxième zone à faible pente pour générer des forces d'approche élevées.

4. Dispositif de réglage selon la revendication 1 ou 3,
**caractérisé en ce que**
les trajectoires de came du premier et du deuxième palier de rampe (17 ; 16) sont adaptées l'une à l'autre de telle sorte qu'il est possible d'obtenir une position bistable ou instable pour le servomoteur d'approche par le biais de certains angles de rotation du dispositif de réglage.

5. Dispositif de réglage selon la revendication 4,
**caractérisé en ce que**
le premier palier à rampe (17) présente deux zones correspondant au deuxième palier à rampe (16) sur l'angle de torsion, une première et une deuxième zone A et B, où
la première zone A présente une pente nulle pour un comportement neutre pendant le franchissement d'un entrefer et la deuxième zone B présente une caractéristique non linéaire accordée de telle sorte qu'une position bistable peut être générée sur toute la plage de l'engagement du frein.

6. Dispositif de réglage selon l'une quelconque des revendications 1 à 5,
**caractérisé en ce que**
le dispositif de réglage est réalisé avec deux actionneurs qui peuvent effectuer un réglage de freinage ensemble ou indépendamment l'un de l'autre.

7. Dispositif de réglage selon l'une quelconque des revendications 1 à 6,
**caractérisé en ce que**
le premier ou le deuxième palier de rampe (17 ; 16) présente une position d'encliquetage, en particulier sous la forme d'une bosse ou d'un creux, qui constitue une position d'encliquetage pour une fonction de frein de stationnement.

8. Dispositif de réglage selon l'une quelconque des revendications 1 à 7,
**caractérisé en ce que**
le ressort précontraint (8) est fixé par une extrémité au premier palier de rampe (17) et par une extrémité opposée à un étrier de frein (25).
